# EUROPEAN PATENT APPLICATION

(11) **EP 4 403 244 A1**
(43) Date of publication of application: **24.07.2024**
(21) Application number: 22869928.6
(22) Date of filing: 12.09.2022
(51) Int. Cl.: B01D 53/06, B01D 53/26, F24F 6/08, F24F 3/14, B01J 20/26, B01J 20/34

(54) **HUMIDITY CONTROL DEVICE OR ATMOSPHERIC WATER GENERATOR**

(30) Priority: 17.09.2021 JP 2021152259
(71) Applicant: DAIKIN INDUSTRIES, LTD., Osaka-Shi, Osaka 530-0001 (JP)
(72) Inventor: KIZAWA, Toshihiro, Osaka-shi, Osaka 530-001 (JP); OKUZAWA, Kento, Osaka-shi, Osaka 530-001 (JP)
(74) Representative: Hoffmann Eitle
(86) International application number: PCT/JP2022/034028
(87) International publication number: WO 2023/042781

(57) **Abstract**

Provided is a humidity control apparatus or an atmospheric water generator that prevents an adsorbent that adsorbs moisture from being damaged by heating during regeneration of the adsorbent. A humidity control apparatus (100) includes a moisture absorbing material (11a) and a heater (12). The moisture absorbing material (11a) adsorbs moisture. The heater (12) heats the moisture absorbing material (11a) to desorb the moisture adsorbed by the moisture absorbing material (11a) from the moisture absorbing material (11a). The moisture absorbing material (11a) has a substrate and a metal-organic framework. The metal-organic framework includes a metal ion and an organic ligand. The substrate has a heat-resistant temperature of 150°C or higher.

## Description

### TECHNICAL FIELD

The present disclosure relates to a humidity control apparatus or an atmospheric water generator.

### BACKGROUND ART

As described in Patent Literature 1 (WO 2018/118377 A), an atmospheric water generator is known in which moisture in atmosphere is adsorbed by an adsorbent having a metal-organic framework, and the moisture desorbed from the adsorbent is condensed to obtain condensed water.

### SUMMARY OF THE INVENTION

### <Technical Problem>

When the adsorbent having the metal-organic framework is heated to desorb moisture from the adsorbent, if a heat-resistant temperature of the adsorbent is low, there is a possibility that the adsorbent is damaged by heat.

### <Solution to Problem>

A humidity control apparatus or an atmospheric water generator according to a first aspect includes an adsorbing unit and a heating unit. The adsorbing unit adsorbs moisture. The heating unit heats the adsorbing unit to desorb the moisture adsorbed by the adsorbing unit from the adsorbing unit. The adsorbing unit has a substrate and a metal-organic framework. The metal-organic framework includes a metal ion and an organic ligand. The substrate has a heat-resistant temperature of 150°C or higher.

The humidity control apparatus or the atmospheric water generator prevents an adsorbent from being damaged by heating of the adsorbent for desorbing the adsorbed moisture from the adsorbent.

A humidity control apparatus or an atmospheric water generator according to a second aspect is the humidity control apparatus or the atmospheric water generator according to the first aspect, in which the adsorbing unit includes the metal-organic framework including a zirconium ion as the metal ion and fumaric acid as the organic ligand, or the metal-organic framework including an aluminum ion as the metal ion and 3,5-pyrazole-dicarboxylic acid as the organic ligand.

The humidity control apparatus or the atmospheric water generator prevents an adsorbent from being damaged by heating of the adsorbent for desorbing the adsorbed moisture from the adsorbent.

A humidity control apparatus or an atmospheric water generator according to a third aspect is the humidity control apparatus or the atmospheric water generator according to the first or second aspect, in which a value obtained by multiplying a density of the metal-organic framework by 90% RH water content of the metal-organic framework is 430 L/m³ or more.

In the humidity control apparatus or the atmospheric water generator, an adsorbent having a high moisture adsorption efficiency is used.

A humidity control apparatus or an atmospheric water generator according to a fourth aspect is the humidity control apparatus or the atmospheric water generator according to any one of the first to third aspects, in which the substrate includes a heat-resistant fiber.

In the humidity control apparatus or the atmospheric water generator, an adsorbent having a high heat resistance is used.

A humidity control apparatus or an atmospheric water generator according to a fifth aspect is the humidity control apparatus or the atmospheric water generator according to the fourth aspect, in which the heat-resistant fiber includes an aramid fiber.

In the humidity control apparatus or the atmospheric water generator, an adsorbent having a high heat resistance is used.

A humidity control apparatus or an atmospheric water generator according to a sixth aspect is the humidity control apparatus or the atmospheric water generator according to the fourth aspect, in which the heat-resistant fiber includes a PBO fiber.

In the humidity control apparatus or the atmospheric water generator, an adsorbent having a high heat resistance is used.

A humidity control apparatus or an atmospheric water generator according to a seventh aspect is the humidity control apparatus or the atmospheric water generator according to the fourth aspect, in which the heat-resistant fiber includes a glass fiber.

In the humidity control apparatus or the atmospheric water generator, an adsorbent having a high heat resistance is used.

A humidity control apparatus or an atmospheric water generator according to an eighth aspect is the humidity control apparatus or the atmospheric water generator according to the fourth aspect, in which the heat-resistant fiber includes a carbon fiber.

In the humidity control apparatus or the atmospheric water generator, an adsorbent having a high heat resistance is used.

A humidity control apparatus or an atmospheric water generator according to a ninth aspect is the humidity control apparatus or the atmospheric water generator according to any one of the first to eighth aspects, and further includes a supply unit that supplies a gas heated by passing through the heating unit to the adsorbing unit.

In the humidity control apparatus or the atmospheric water generator, since the adsorbent is not directly heated, deterioration of the adsorbent due to heating is suppressed.

A humidity control apparatus or an atmospheric water generator according to a 10 aspect is the humidity control apparatus or the atmospheric water generator according to any one of the first to ninth aspects, in which a content of the metal-organic framework per unit area of the adsorbing unit is 70 wt% or more.

In the humidity control apparatus or the atmospheric water generator, an adsorbent having a content of the metal-organic framework of a predetermined value or more is used.

A humidity control apparatus or an atmospheric water generator according to an eleventh aspect is the humidity control apparatus or the atmospheric water generator according to any one of the first to tenth aspects, and further includes an adjuster that adjusts an amount of the moisture to be desorbed from the adsorbing unit.

The humidity control apparatus or the atmospheric water generator can adjust an ability to desorb moisture from the adsorbent.

A humidity control apparatus according to a twelfth aspect is the humidity control apparatus according to any one of the first to eleventh aspects, and further includes a humidifier that humidifies a target space by using the moisture desorbed from the adsorbing unit.

The humidity control apparatus prevents the adsorbent from being damaged by heating of the adsorbent for desorbing the adsorbed moisture from the adsorbent.

An atmospheric water generator according to a thirteenth aspect is the atmospheric water generator according to any one of the first to eleventh aspects, and further includes a condensing unit that condenses the moisture desorbed from the adsorbing unit to obtain condensed water.

The atmospheric water generator prevents the adsorbent from being damaged by heating of the adsorbent for desorbing the adsorbed moisture from the adsorbent.

### BRIEF DESCRIPTION OF THE DRAWINGS

FIG. 1 is a schematic diagram of a humidity control apparatus 100 according to an embodiment.
FIG. 2 is a functional block diagram of the humidity control apparatus 100.
FIG. 3 is a plan view of a moisture absorbing rotor 11.
FIG. 4 is a schematic diagram of an atmospheric water generator 200 according to Modification D.
FIG. 5 is a functional block diagram of the atmospheric water generator 200.
FIG. 6 is a schematic external view of an air conditioner 300 according to Modification E.
FIG. 7 is a schematic configuration diagram of the air conditioner 300.
FIG. 8 is an exploded perspective view of a humidifying unit 350.
FIG. 9 is an explanatory view of a region of a humidifying rotor 52 in top view.
FIG. 10 is a functional block diagram of the humidifying unit 350.

### DESCRIPTION OF EMBODIMENTS

### (1) Overall configuration of humidity control apparatus 100

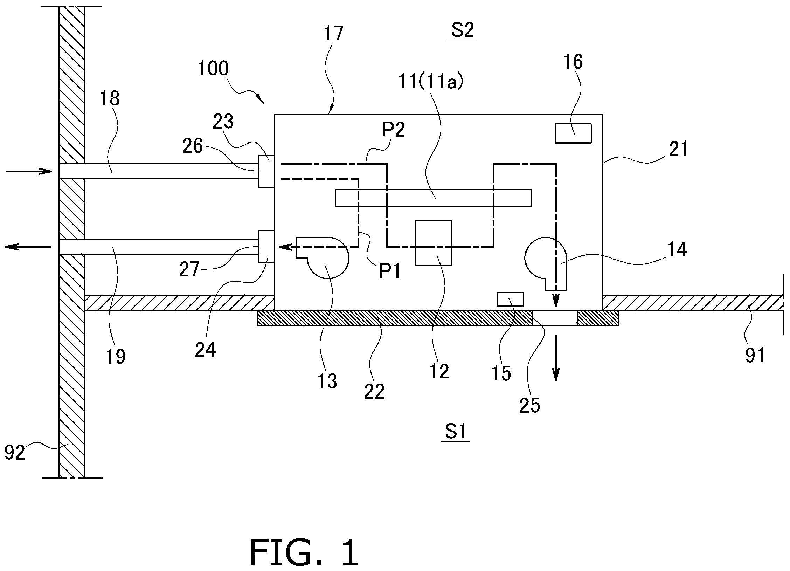

A humidity control apparatus 100 according to the present embodiment performs a humidifying operation of humidifying a target space S1. As illustrated in FIG. 1, the target space S1 is a space in a room partitioned by, for example, a ceiling wall 91, a side wall 92, and a floor wall (not illustrated).

The humidity control apparatus 100 introduces and humidifies outdoor air and releases the humidified air to the target space S1. The humidity control apparatus 100 includes a moisture absorbing rotor 11, a heater 12, a first fan 13, a second fan 14, a humidity sensor 15, a controller 16, a casing 17 accommodating the above devices, an air supply duct 18, and an exhaust duct 19.

The casing 17 includes a casing body 21, a panel 22, an air supply connection pipe 23, and an air exhaust connection pipe 24.

Most of the casing body 21 is disposed in an attic space S2 formed above the ceiling wall 91. A lower end part of the casing body 21 penetrates the ceiling wall 91.

The panel 22 is detachably attached to a lower surface of the casing body 21. The panel 22 is provided with a release port 25 that communicates an inside of the casing body 21 with the target space S1 and releases air from the casing body 21 to the target space S1.

One end of the air supply connection pipe 23 and one end of the exhaust connection pipe 24 are disposed in the casing body 21. The other end of the air supply connection pipe 23 is an air supply port 26 for sucking outdoor air. The other end of the exhaust connection pipe 24 is an exhaust port 27 for exhausting air to outside.

The casing 17 has a first ventilation path P1 and a second ventilation path P2 through which air introduced from the outside flows. The first ventilation path P1 is a ventilation path through which outdoor air is introduced from the air supply port 26 into the casing body 21 and flows to the exhaust port 27. The second ventilation path P2 is a ventilation path through which outdoor air is introduced into the casing body 21 from the air supply port 26 and flows to the release port 25.

One end of the air supply duct 18 is connected to the air supply connection pipe 23 of the casing 17. The other end of the air supply duct 18 penetrates the side wall 92 and communicates with the outside. The air supply duct 18 serves as a first air supply duct that introduces outdoor air from the air supply port 26 into the first ventilation path P1 and a second air supply duct that introduces outdoor air from the air supply port 26 into the second ventilation path P2.

One end of the exhaust duct 19 is connected to the exhaust connection pipe 24 of the casing 17. The other end of the exhaust duct 19 penetrates the side wall 92 and communicates with the outside. The air flowing through the first ventilation path P1 is exhausted from the exhaust port 27 to the outside through the exhaust duct 19.

The moisture absorbing rotor 11 is disposed in a midway of the first ventilation path P1 and in a midway of the second ventilation path P2. The moisture absorbing rotor 11 is configured to remove moisture from the air flowing through the first ventilation path P1 and release the moisture to the air flowing through the second ventilation path P2 to humidify the air. The heater 12 is provided in a midway of the second ventilation path P2 and heats the air flowing through the second ventilation path P2.

The first fan 13 is disposed near the exhaust port 27 in the first ventilation path P1 and generates an air flow in the first ventilation path P1. Specifically, the first fan 13 is disposed at a position where outdoor air can be introduced into the first ventilation path P1 through the air supply duct 18 and at a position where air deprived of moisture by the moisture absorbing rotor 11 can be exhausted to the outside through the exhaust duct 19.

The second fan 14 is disposed near the release port 25 in the second ventilation path P2 and generates an air flow in the second ventilation path P2. Specifically, the second fan 14 is disposed at a position where outdoor air can be introduced into the second ventilation path P2 through the air supply duct 18 and at a position where air humidified by the moisture absorbing rotor 11 can be released to the target space S1 from the release port 25.

The humidity sensor 15 is provided near the release port 25 in the casing body 21 and detects a humidity of the target space S1. A detection value of the humidity sensor 15 is output to the controller 16.

The controller 16 is a computer such as a microcontroller. The controller 16 is hardware for implementing various functions by executing a predetermined program with predetermined data.

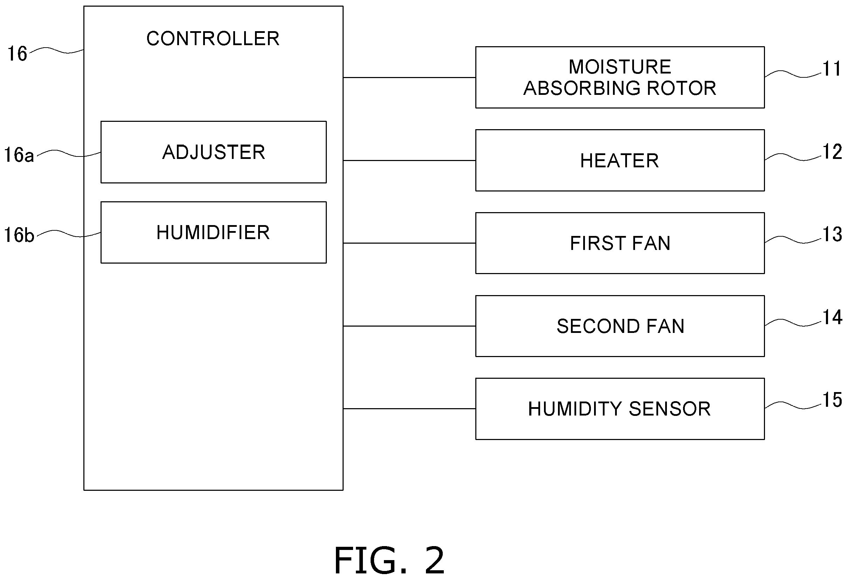

As illustrated in FIG. 2, the controller 16 controls the moisture absorbing rotor 11, the heater 12, the first fan 13, and the second fan 14 on the basis of the detection value of the humidity sensor 15 during the humidifying operation. As a result, outdoor air passes through the air supply duct 18 and is introduced into the first ventilation path P1 and the second ventilation path P2 of the casing body 21. Moisture in the air introduced into the first ventilation path P1 is deprived of by the moisture absorbing rotor 11, and the air deprived of the moisture passes through the exhaust duct 19 and is exhausted to the outside. Meanwhile, the air introduced into the second ventilation path P2 is humidified by the moisture absorbing rotor 11, and the humidified air is released from the release port 25 to the target space S1.

### (2) Configuration of moisture absorbing rotor 11

The moisture absorbing rotor 11 has a disk shape and is configured to be rotatable about a center of the disk. The moisture absorbing rotor 11 includes a moisture absorbing material 11a formed in a substantially annular shape. The moisture absorbing rotor 11 is configured to allow air to pass in a thickness direction of the moisture absorbing rotor 11 to bring the passing air into contact with the moisture absorbing material 11a. When a temperature of the moisture absorbing material 11a is low, the moisture absorbing material 11a adsorbs moisture from the air when the air passes through the moisture absorbing rotor 11. When the temperature of the moisture absorbing material 11a is high, the moisture absorbing material 11a releases adsorbed moisture to the air when the air passes through the moisture absorbing rotor 11.

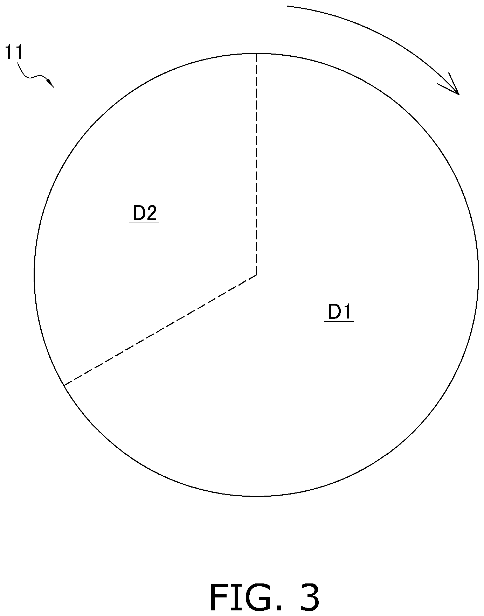

As illustrated in FIG. 3, the moisture absorbing rotor 11 rotates so as to sequentially pass through a first region D1 and a second region D2 and return to the first region D1 in plan view. The first region D1 is adjacent to the second region D2. The first region D1 has, for example, a fan shape having a central angle of 240° around an axis of the moisture absorbing rotor 11 in plan view. The second region D2 has, for example, a fan shape having a central angle of 120° around the axis of the moisture absorbing rotor 11 in plan view. The first ventilation path P1 passes through the first region D1. The second ventilation path P2 sequentially passes through the first region D1 and the second region D2.

The first region D1 is a region through which outdoor air introduced from the air supply port 26 passes. In the first region D1, the moisture absorbing material 11a is cooled by the passing air and adsorbs moisture in the passing air. A portion of the moisture absorbing material 11a that has adsorbed moisture moves from the first region D1 to the second region D2.

The second region D2 is a region through which the air passing through the first region D1 and heated by the heater 12 passes. In the second region D2, the moisture absorbing material 11a is heated by the passing air and releases moisture to the passing air to humidify the air. A portion of the moisture absorbing material 11a that has released moisture moves from the second region D2 to the first region D1.

The heater 12 is disposed downstream of the first region D1 and upstream of the second region D2 in the second ventilation path P2. In the second ventilation path P2, the air having passed through the first region D1 is heated when passing through the heater 12. The air heated after passing through the heater 12 heats the moisture absorbing material 11a in the second region D2. As a result, the heater 12 indirectly heats the moisture absorbing material 11a in the second region D2, desorbs the moisture adsorbed by the moisture absorbing material 11a from the moisture absorbing material 11a, and regenerates the moisture absorbing material 11a. In this case, the second fan 14 generates an air flow in the second ventilation path P2 to supply the air heated by passing through the heater 12 to the moisture absorbing material 11a. The temperature of the moisture absorbing material 11a heated in the second region D2 is preferably from 100°C to 130°C. In this case, it is preferable that the temperature of the moisture absorbing material 11a does not locally exceed 250°C.

The heater 12 may directly heat the moisture absorbing material 11a in the second region D2. In this case, the moisture absorbing material 11a may be heated by, for example, radiant heat of the heater 12.

### (3) Control of humidity control apparatus 100

As illustrated in FIG. 2, the controller 16 includes an adjuster 16a and a humidifier 16b. The adjuster 16a and the humidifier 16b each correspond to a function implemented by the controller 16 executing a predetermined program.

The adjuster 16a adjusts the temperature of the moisture absorbing material 1 1a heated in the second region D2 by controlling output of the heater 12. When the temperature of the moisture absorbing material 11a in the second region D2 is raised, an amount of moisture desorbed from the moisture absorbing material 11a increases. When the temperature of the moisture absorbing material 11a in the second region D2 is lowered, an amount of moisture desorbed from the moisture absorbing material 11a decreases. As a result, the adjuster 16a adjusts the amount of moisture to be desorbed from the moisture absorbing material 11a.

The humidifier 16b humidifies the target space S1 by using the moisture desorbed from the moisture absorbing material 11a such that the humidity of the target space S1 becomes a predetermined value. The humidifier 16b controls output of the second fan 14 to adjust a supply amount of the air humidified by passing through the moisture absorbing material 11a to the target space S1. When the output of the second fan 14 is increased, the humidity of the target space S1 increases. When the output of the second fan 14 is decreased, the humidity of the target space S1 decreases. Thus, the humidifier 16b adjusts the humidity of the target space S1.

### (4) Configuration of moisture absorbing material 11a

The moisture absorbing material 11a is, for example, an adsorption element configured by carrying a metal-organic framework on a substrate formed in a honeycomb shape.

The metal-organic framework (MOF) is a porous material obtained by reaction of a metal ion with an organic ligand and having a significantly large specific surface area. In the metal-organic framework, the organic ligand is linked to the metal ion, and thus, a polymer structure having an infinite number of openings inside is obtained. An opening diameter and a topology of the metal-organic framework can be adjusted by selecting and combining a metal ion and an organic ligand. The opening diameter of the metal organic framework can be adjusted by selecting and combining a metal ion and an organic ligand, and the metal-organic framework can selectively adsorb a target. The metal-organic frameworks are used, for example, as porous materials having a function of selective storage and separation of molecules and ions. In the present embodiment, the metal-organic framework is used as adsorbent for adsorbing and desorbing moisture in air.

The metal-organic framework can be synthesized by various methods. A solution method, which is the simplest synthesis method, is a method of producing a metal-organic framework by mixing a metal salt and an organic ligand in a solution at normal temperature and normal pressure. In the solution method, the size of crystals to be produced can be controlled by adjusting a mixing rate. In addition to the solution method, the metal-organic frameworks may be synthesized by any method selected from known methods such as a diffusion method, a hydrothermal method, a microwave method, an ultrasonic method, and a solid phase synthesis method.

The performance of the metal-organic frameworks is measured with an effective adsorption amount. In the present embodiment, the effective adsorption amount is a mass of moisture that can be adsorbed and desorbed by the metal-organic framework having a unit mass (1 g) in one adsorption cycle. In one adsorption cycle, the moisture absorbing material 11a performs one adsorption process and one desorption process.

In the present embodiment, the metal-organic framework used for the moisture absorbing material 11a is MOF-801 or MOF-303. MOF-801 is a metal-organic framework in which zirconium ions as metal ions are coordinated by fumaric acid as an organic ligand. MOF-303 is a metal-organic framework in which an aluminum ions as metal ions are coordinated by 3,5-pyrazole-dicarboxylic acid as an organic ligand. MOF-801 is represented by the following composition formula A-1. MOF-303 is represented by the following composition formula A-2.
- Composition formula A-1: [Zr₆ (O)₄(OH)₄(fumarate)₆]ₙ
- Composition formula A-2: [Al (OH)(3,5-pyrazoledicarboxylate)(H₂O)]ₙ

CAS registry number of MOF-801 is 1355974-78-5. CAS registry number of MOF-303 is 2050043-41-7.

In the present embodiment, when the moisture absorbing material 11a is dry, a content of the metal-organic framework per unit area of the moisture absorbing material 11a is preferably 70 wt% or more.

In the present embodiment, a heat-resistant temperature of the substrate carrying the metal-organic framework is 150°C or higher. The heat-resistant temperature of the substrate is a temperature at which combustion or carbonization of the substrate starts in a process of heating the substrate. The substrate is, for example, paper or a fiber framework including heat-resistant fibers. The heat-resistant fiber is, for example, an aramid fiber, a PBO fiber, a glass fiber, or a carbon fiber.

### (5) Characteristics of metal-organic framework

The following table relates to physical properties of MOF-801, MOF-303, and zeolite.

**[Table 1]**

| Sample | Density [kg/m³] | 90% RH moisture content [kg/kg] | Density × Moisture content [L/m³] |
|---|---|---|---|
| MOF-801 | 1597 | 0.38 | 610 |
| MOF-303 | 1293 | 0.48 | 615 |
| Zeolite | 1270 | 0.34 | 429 |

The above data are results obtained by measuring and evaluating a sample of each substance. Zeolite is an adsorbent conventionally used to adsorb and desorb moisture in air, and is a substance to be compared with MOF-801 and MOF-303. As zeolite, a powder product of zeolite 13X is used.

In the above table, "density" is a crystal density calculated from crystal structure data (cif). The "90% RH water content" is a measured value at a relative humidity (RH) of 90%. The "density x water content" is a value obtained by multiplying the density by 90% RH water content.

From the above table, regarding MOF-801 and MOF-303, the value obtained by multiplying the density by 90% RH water content is 430 L/m³ or more, specifically 600 L/m³ or more. Therefore, it has been confirmed that a moisture adsorption amount per unit volume of MOF-801 and MOF-303 is higher than a moisture adsorption amount per unit volume of zeolite. In other words, it has been confirmed that MOF-801 and MOF-303 is superior in moisture adsorption performance to zeolite.

The following table relates to the moisture adsorption performance of MOF-801, MOF-303, and zeolite (zeolite 13X).

**[Table 2]**

| Sample | Mass transfer coefficient [s⁻¹] | Adsorption enthalpy [kJ/mol] |
|---|---|---|
| MOF-801 | 2.69 × 10⁻³ | -30 to -50 |
| MOF-303 | 7.23 × 10⁻⁴ | -50 to -65 |
| Zeolite | 2.25 × 10⁻⁵ | -60 to -70 |

The above data are values obtained from results of performing moisture adsorption measurement under an environment at a temperature of 298 K and performing adsorption rate analysis and adsorption enthalpy analysis.

In the above table, the mass transfer coefficient is an index related to a moisture adsorption rate of the sample. The higher the mass transfer coefficient, the higher the moisture adsorption rate. The mass transfer coefficient of MOF-801 is about 120 times the mass transfer coefficient of zeolite, and the mass transfer coefficient of MOF-303 is about 32 times the mass transfer coefficient of zeolite. Therefore, it has been confirmed that the moisture adsorption rates of MOF-801 and MOF-303 are larger than the moisture adsorption rate of zeolite. In addition, the adsorption enthalpies of MOF-801 and MOF-303 are lower than the adsorption enthalpy of zeolite. Therefore, it has been confirmed that moisture adsorption energies of MOF-801 and MOF-303 are smaller than a moisture adsorption energy of the zeolite.

Furthermore, heat resistance of MOF-801, MOF-303, and zeolite has been measured. The heat resistance has been measured by preparing a ϕ2 mm tablet as a sample and performing simultaneous thermogravimetry and differential thermal analysis (TG-DTA measurement) under the condition of heating from room temperature to 500°C in the air. As a result, it has been confirmed that MOF-303 hardly changes in combustion heat even when heated to 500°C, and is excellent in heat resistance. It has been confirmed that MOF-801 hardly changes in combustion heat even when heated to 350°C, and is excellent in heat resistance up to around 300°C.

From the above measurement and evaluation results, it has been confirmed that in the present embodiment, MOF-801 and MOF-303 used for the moisture absorbing material 11a have the following characteristics as compared with zeolite (zeolite 13X) which is a conventional moisture adsorbent.
(a) MOF-801 and MOF-303 have a larger moisture adsorption amount per unit volume than zeolite.
(b) MOF-801 and MOF-303 have a higher moisture adsorption rate than zeolite. In particular, MOF-801 has a high moisture adsorption rate and is suitable as a moisture adsorbent.
(c) MOF-801 and MOF-303 have adsorption energies equal to or smaller than an adsorption energy of zeolite. In particular, MOF-801 has small adsorption energy and is suitable as a moisture adsorbent.
(d) Similarly to zeolite, MOF-801 and MOF-303 are excellent in heat resistance up to around 300°C. In particular, MOF-303 has excellent heat resistance equal to the heat resistance of zeolite.

### (6) Effects

(6-1)
In the humidity control apparatus 100, MOF-801 and MOF-303 having a relatively low temperature at which adsorbed moisture is desorbed are used as the metal-organic frameworks carried by the substrate of the moisture absorbing material 11a. Specifically, when MOF-801 and MOF-303 that have adsorbed moisture are heated to around 100°C, the adsorbed moisture is desorbed and regenerated. In the humidity control apparatus 100, the heat-resistant temperature of the substrate of the moisture absorbing material 11a is 150°C or higher. Therefore, in the humidity control apparatus 100, since it is not necessary to heat the moisture absorbing material 11a to a temperature equal to or higher than the heat-resistant temperature of the substrate in order to desorb the adsorbed moisture from the moisture absorbing material 11a, damage or ignition of the moisture absorbing material 11a is suppressed.

(6-2)
In the humidity control apparatus 100, MOF-801 and MOF-303 having high heat resistance up to around 300°C are used as the metal-organic frameworks carried by the substrate of the moisture absorbing material 11a. Therefore, in the humidity control apparatus 100, damage or ignition of the moisture absorbing material 11a due to heating of the moisture absorbing material 11a for desorbing the adsorbed moisture from the moisture absorbing material 11a is suppressed.

(6-3)
In the humidity control apparatus 100, the moisture absorbing material 11a in which a value obtained by multiplying the density of the metal-organic framework carried by the substrate by 90% RH water content is 430 L/m³ or more is used. Therefore, in the humidity control apparatus 100, since the metal-organic framework having a large moisture adsorption amount per unit volume is used for the adsorption element, the moisture adsorption performance of the moisture absorbing material 11a can be improved.

(6-4)
In the humidity control apparatus 100, the air heated by passing through the heater 12 to the moisture absorbing material 11a is supplied to heat the moisture absorbing material 11a. Therefore, since the moisture absorbing material 11a is not directly heated by the heater 12, the moisture absorbing material 11a is prevented from being overheated to deteriorate the substrate and the metal-organic framework included in the moisture absorbing material 11a.

(6-5)
The humidity control apparatus 100 can adjust an ability to desorb moisture from the moisture absorbing material 11a by adjusting the outputs of the heater 12 and the second fan 14. Therefore, the humidity control apparatus 100 can easily control the humidity of the target space S1 by adjusting the outputs of the heater 12 and the second fan 14.

### (7) Modifications

Modifications of the present embodiment will be described below. Part or entirety of any one of the modifications may be combined with contents of a different one of the modifications within a range causing no inconsistency therebetween.

### (7-1) Modification A

In the embodiment, the heat-resistant temperature of the substrate of the moisture absorbing material 11a is 150°C or higher. The heat-resistant temperature of the substrate is preferably 300°C or higher. Specifically, when the substrate is paper, the heat-resistant temperature of the substrate is preferably 300°C or higher, which is an ignition point of the paper.

In this modification, for example, when the moisture absorbing material 11a is directly heated by the heater 12, there is a possibility that temperature unevenness occurs in the heated moisture absorbing material 11a. In this case, even if the moisture absorbing material 11a is heated until the entire moisture absorbing material 11a reaches a temperature equal to or higher than a temperature at which moisture is desorbed from the moisture absorbing material 11a, the temperature of a portion of the moisture absorbing material 11a having the highest temperature is prevented from exceeding the heat-resistant temperature of the substrate of the moisture absorbing material 11a. Therefore, even if temperature unevenness occurs in the moisture absorbing material 11a heated by the heater 12, damage or ignition of the moisture absorbing material 11a is suppressed.

### (7-2) Modification B

In the embodiment, the moisture absorbing material 11a is an adsorption element configured by carrying the metal-organic framework on the substrate formed in a honeycomb shape. However, the moisture absorbing material 11a may be a mixed paper produced by mixing paper pulp with a metal-organic framework and performing papermaking.

The heat resistance of the mixed paper of this modification has been measured by performing simultaneous thermogravimetry and differential thermal analysis (TG-DTA measurement) under the condition of heating from room temperature to 500°C in the air. As a result, it has been confirmed that combustion or carbonization of the mixed paper of this modification proceeds at 300°C or higher regardless of the type of paper, and the type and addition amount of the metal-organic framework. In addition, it has been confirmed that the mixed paper of this modification is regenerated by desorbing moisture from the metal-organic framework at around 100°C regardless of the type of paper and the type and addition amount of the metal-organic framework when moisture is adsorbed. On the other hand, in general, zeolite that has adsorbed moisture (zeolite 13X) desorbs moisture and does not regenerate unless heated to around 250°C. Therefore, it has been confirmed that the mixed paper of this modification can be used as the moisture absorbing material 11a, and is superior in moisture adsorption performance and regeneration performance at a low temperature (around 100°C) to zeolite. Furthermore, it has been confirmed that even when the mixed paper of this modification is heated at a temperature of 110°C to 170°C for six hours, the combustion or carbonization of the mixed paper does not progress, and the regeneration performance of the mixed paper does not deteriorate.

### (7-3) Modification C

In the embodiment, the humidity control apparatus 100 performs a humidifying operation of humidifying the target space S1. However, the humidity control apparatus 100 may perform a ventilation operation of exchanging the air in the target space S1 or a dehumidifying operation of dehumidifying the target space S1 instead of or in addition to the humidifying operation.

### (7-4) Modification D

The moisture absorbing material 11a according to the embodiment may be used in an apparatus other than the humidity control apparatus 100. Next, an atmospheric water generator 200 which is another usage example of the moisture absorbing material 11a will be described.

The atmospheric water generator 200 of this modification produces water by passing heated air through an adsorbent that adsorbs moisture in the air and cooling the obtained moist air to generate condensed water.

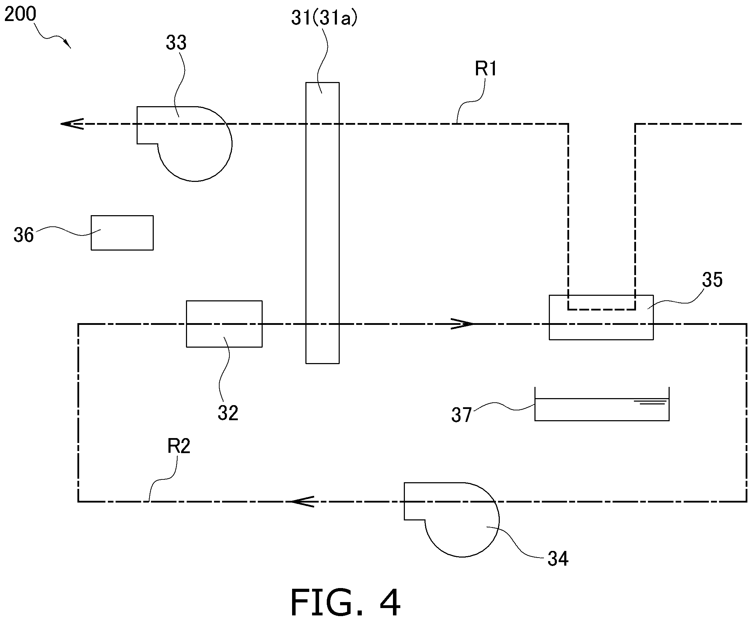

As illustrated in FIG. 4, the atmospheric water generator 200 includes a moisture absorbing rotor 31, a heater 32, a first fan 33, a second fan 34, a condenser 35, a controller 36, a water storage tank 37, and a casing (not illustrated) that accommodates the above devices.

The casing of the atmospheric water generator 200 has a first ventilation path R1 through which first air flows and a second ventilation path R2 through which second air flows. Similarly to the moisture absorbing rotor 11 according to the embodiment, the moisture absorbing rotor 31 has a first region D1 and a second region D2 as illustrated in FIG. 3. The first region D1 is a region through which the first air passes. The second region D2 is a region through which the second air passes. The moisture absorbing rotor 31 includes a moisture absorbing material 31a similar to the moisture absorbing material 11a according to the embodiment.

In the first ventilation path R1, the first air is sucked from atmosphere by the first fan 33, sequentially passes through the condenser 35 and the moisture absorbing material 31a in the first region D1, and then is exhausted to the atmosphere. The condenser 35 is disposed upstream of the moisture absorbing material 31a.

In the second ventilation path R2, the second air is sucked by the second fan 34 and circulates while sequentially passing through the heater 32, the moisture absorbing material 31a in the second region D2, and the condenser 35. In the second ventilation path R2, the heater 32 for heating the dry second air is disposed upstream of the moisture absorbing material 31a, and a condenser 35 for cooling and condensing the wet second air is disposed downstream of the moisture absorbing material 31a.

The first air sucked into the first ventilation path R1 by the first fan 33 passes through the condenser 35 and then passes through the moisture absorbing rotor 31. At this time, moisture included in the first air is adsorbed by the moisture absorbing material 31a in the first region D1. The first air having passed through the moisture absorbing rotor 31 is exhausted to the atmosphere. A portion of the moisture absorbing material 31a that has adsorbed moisture moves from the first region D1 to the second region D2.

The second air circulating through the second ventilation path R2 by the second fan 34 is heated by the heater 32 and passes through the moisture absorbing rotor 31. At this time, moisture is desorbed from the moisture absorbing material 31a in the second region D2 by the heated second air. A portion of the moisture absorbing material 31a that has released moisture moves from the second region D2 to the first region D1. The second air having passed through the moisture absorbing rotor 31 becomes moist air including moisture desorbed from the moisture absorbing material 31a. Thereafter, the second air exchanges heat with the first air in the condenser 35. As a result, the second air is cooled and condensed, and consequently, condensed water is obtained in the condenser 35. The condensed water is stored in the water storage tank 37 disposed below the condenser 35. The condenser 35 includes, for example, a pipe through which the second air after passing through the moisture absorbing rotor 31 flows and a pipe through which the first air before passing through the moisture absorbing rotor 31 flows. In this case, flow directions of the first air and the second air may be countercurrent or cocurrent.

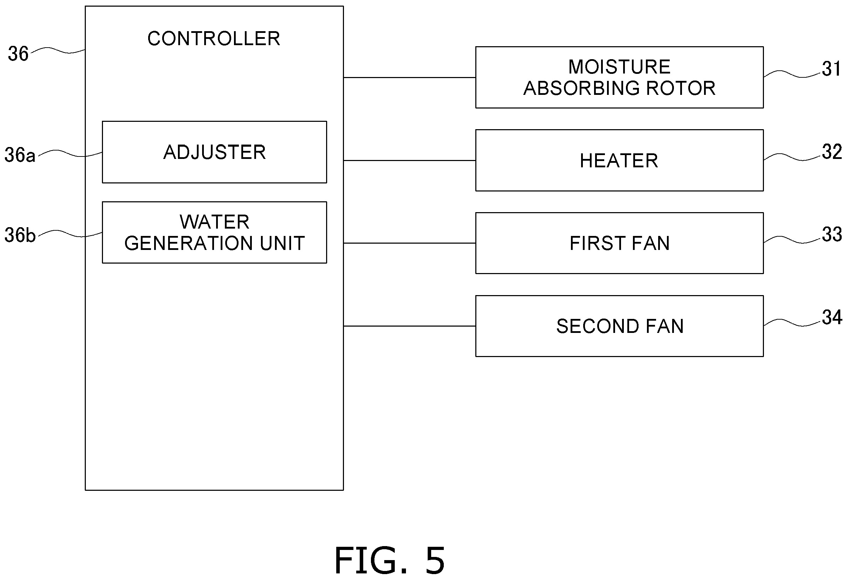

Similarly to the controller 16 according to the embodiment, the controller 36 is a computer such as a microcontroller. As illustrated in FIG. 5, the controller 36 controls the moisture absorbing rotor 31, the heater 32, the first fan 33, and the second fan 34.

As illustrated in FIG. 5, for example, the controller 36 includes an adjuster 36a and a water generation unit 36b. The adjuster 36a and the water generation unit 36b each correspond to a function implemented by the controller 16 executing a predetermined program.

The adjuster 36a adjusts the temperature of the moisture absorbing material 3 1a heated in the second region D2 by controlling output of the heater 32. When the temperature of the moisture absorbing material 31a in the second region D2 is raised, an amount of moisture desorbed from the moisture absorbing material 31a increases. When the temperature of the moisture absorbing material 31a in the second region D2 is lowered, an amount of moisture desorbed from the moisture absorbing material 31a decreases. As a result, the adjuster 36a adjusts the amount of moisture to be desorbed from the moisture absorbing material 31a.

The water generation unit 36b controls output of the second fan 34 to adjust the amount of condensed water generated in the condenser 35. When the output of the second fan 34 is increased, a generation amount of condensed water increases. When the output of the second fan 34 is decreased, the generation amount of condensed water decreases. As a result, the water generation unit 36b can adjust the generation amount of the condensed water on the basis of, for example, a detection value of a water level sensor (not illustrated) that detects an amount of water stored in the water storage tank 37 so that the amount of water stored in the water storage tank 37 can fall within a predetermined range.

### (7-5) Modification E

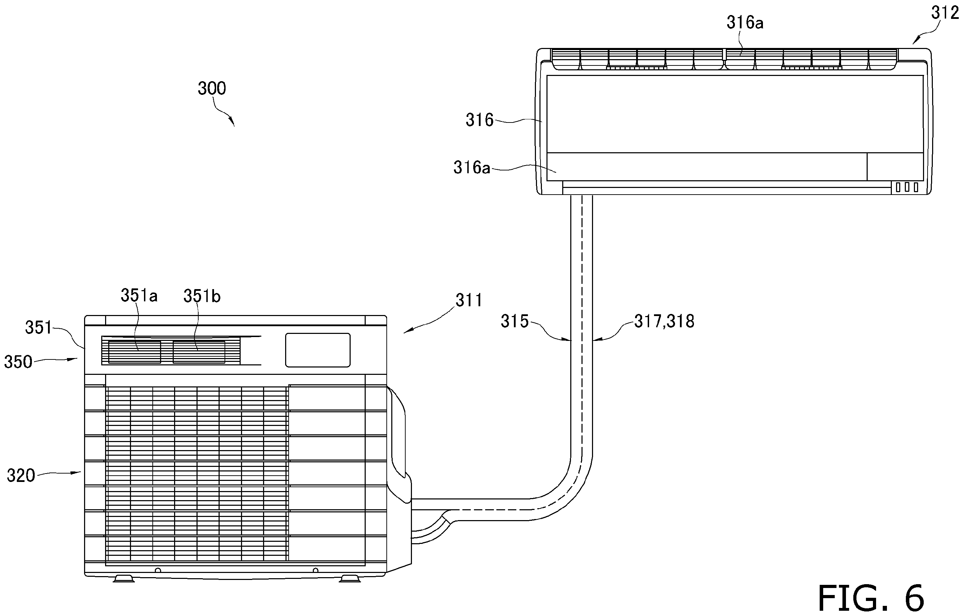

The moisture absorbing material 11a according to the embodiment may be used in an apparatus other than the humidity control apparatus 100. Next, an air conditioner 300 which is another usage example of the moisture absorbing material 11a will be described with reference to FIGS. 6 to 9.

### (7-5-1) Air conditioner

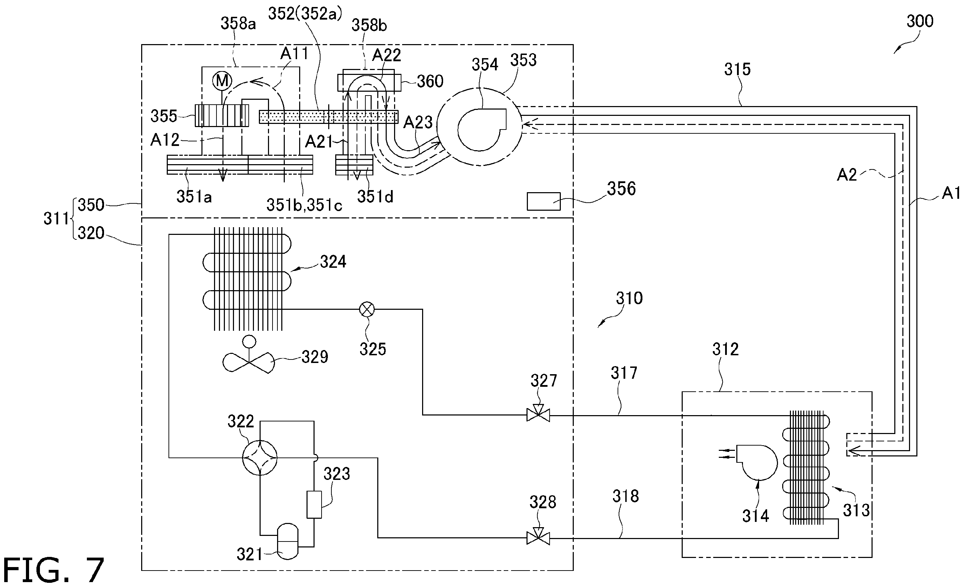

FIG. 6 is a schematic external view of the air conditioner 300. FIG. 7 is a schematic configuration diagram of the air conditioner 300.

The air conditioner 300 is a pair type air conditioner in which one outdoor unit 311 and one indoor unit 312 are connected to each other via a liquid refrigerant pipe 317, a gas refrigerant pipe 318, and an air supply and exhaust duct 315. The air conditioner 300 includes a refrigerant circuit 310 configured by connecting the outdoor unit 311 and the indoor unit 312 via the gas refrigerant pipe 318 and the liquid refrigerant pipe 317. The air supply and exhaust duct 315 connects a humidifying unit 350 and the indoor unit 312 in the outdoor unit 311.

The air conditioner 300 can perform operations such as a cooling operation, a heating operation, a dehumidifying operation, a humidifying operation, an air-supplying operation, and an air-exhausting operation. Note that the air conditioner is not limited to the above configuration, and may be, for example, a multi-type air conditioner in which a plurality of indoor units is connected in parallel to one outdoor unit.

### (7-5-2) Configuration of indoor unit

The indoor unit 312 is, for example, a wall-mounted indoor unit installed on an indoor wall surface or the like. The indoor unit 312 includes an indoor unit casing 316, an indoor heat exchanger 313, an indoor fan 314, and the like. The indoor heat exchanger 313 and the indoor fan 314 are accommodated in the indoor unit casing 316.

The indoor unit casing 316 has a substantially rectangular parallelepiped shape extending in a left-right direction, and includes an air intake port 316a provided in an upper part and an air blow-out port 316b provided in a lower front part.

The indoor heat exchanger 313 includes a plurality of heat transfer tubes connected to each other and a plurality of fins inserted and fixed to the plurality of heat transfer tubes. The indoor heat exchanger 313 is an air heat exchanger that causes heat exchange between the refrigerant flowing inside and the air passing through the outside.

The indoor fan 314 is, for example, a cross-flow fan that is rotationally driven to generate an air flow in a direction intersecting an axis. The indoor fan 314 sucks indoor air into the indoor unit casing 316 and blows the air after heat exchange with the indoor heat exchanger 313 to an indoor space.

An indoor end of the air supply and exhaust duct 315 communicates with a portion downstream of the air intake port 316a and upstream of the indoor heat exchanger 313 in an air flow formed by the indoor fan 314 in the internal space of the indoor unit casing 316.

### (7-5-3) Configuration of outdoor unit

The outdoor unit 311 includes an outdoor air conditioning unit 320 in a lower part and the humidifying unit 350 in an upper part. The humidifying unit 350 is a type of humidity control apparatus having a function similar to the function of the humidity control apparatus 100 according to the embodiment.

### (7-5-4) Configuration of outdoor air conditioning unit

The outdoor air conditioning unit 320 accommodates a compressor 321, a four-way switching valve 322 connected to a discharge side of the compressor 321, an accumulator 323 connected to a suction side of the compressor 321, an outdoor heat exchanger 324 connected to the four-way switching valve 322, an outdoor expansion valve 325 connected to the outdoor heat exchanger 324, and an outdoor fan 329 that supplies an air flow to the outdoor heat exchanger 324. The outdoor expansion valve 325 is connected to the liquid refrigerant pipe 317 via a liquid shutoff valve 327. The four-way switching valve 322 is connected to the gas refrigerant pipe 318 via a gas shutoff valve 328. The outdoor air conditioning unit 320 is connected to the indoor unit 312 via the liquid refrigerant pipe 317 and the gas refrigerant pipe 318. Specifically, the liquid refrigerant pipe 317 is connected to one end of the indoor heat exchanger 313 in the indoor unit 312. The gas refrigerant pipe 318 is connected to the other end of the indoor heat exchanger 313 in the indoor unit 312.

### (7-5-5) Configuration of humidifying unit

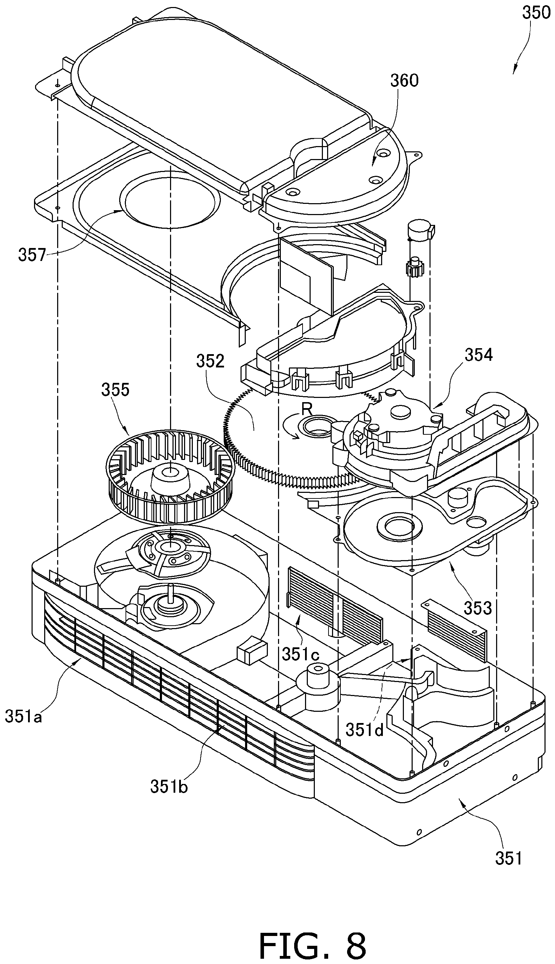

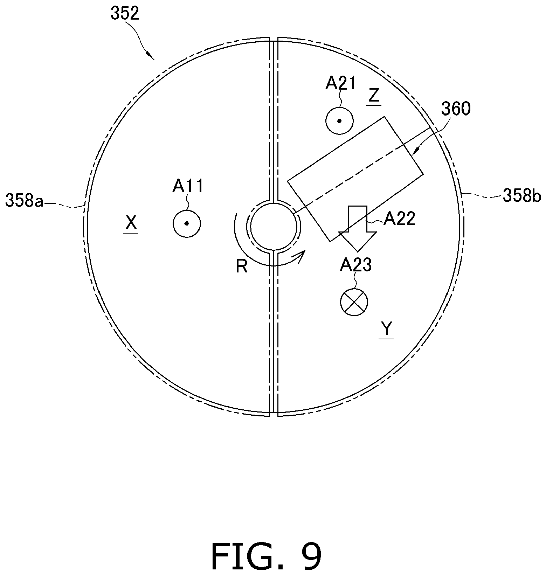

FIG. 8 is an exploded perspective view of the humidifying unit 350. FIG. 9 is an explanatory view of a region of a humidifying rotor 352 in top view.

The humidifying unit 350 includes a humidifying unit casing 351, a humidifying rotor 352, a heater 360, an adsorption fan 355, a flow path switching device 353, and an air supply and exhaust fan 354. The humidifying unit 350 can discharge air taken in from an indoor space through the air supply and exhaust duct 315 to outdoors, and can humidify outdoor air taken in from outdoors and supply the air to the indoor space through the air supply and exhaust duct 315.

### (7-5-5-1) Humidifying unit casing

The humidifying unit casing 351 accommodates the humidifying rotor 352, the heater 360, the air supply and exhaust fan 354, the flow path switching device 353, the adsorption fan 355, and the like.

A moisture absorption blow-out port 351a including a plurality of slit-shaped openings and a first moisture absorption intake port 351b are provided side by side on a front surface of the humidifying unit casing 351. The first moisture absorption intake port 351b is an opening through which air taken in from outdoors outside of the humidifying unit casing 351 passes in order to supply the outdoor air including moisture to the humidifying rotor 352. The moisture absorption blow-out port 351a is an opening for exhausting, to outside of the humidifying unit casing 351, air that has flowed through the moisture absorption flow path 358a and adsorbing moisture by an adsorption region X as a part of the humidifying rotor 352.

A second moisture absorption intake port 351c and an air supply and exhaust port 351d including a plurality of slit-shaped openings are provided on a back surface of the humidifying unit casing 351. Similarly to the first moisture absorption intake port 351b, the second moisture absorption intake port 351c is an opening through which air taken in from outdoors outside of the humidifying unit casing 351 passes in order to supply the outdoor air including moisture to the adsorption region X of the humidifying rotor 352. The air supply and exhaust port 351d is an opening for taking outdoor air into a humidifying flow path 358b during the humidifying operation or the air-supplying operation. The outdoor air flowing into the humidifying flow path 358b is heated by the heater 360 after passing through a cooling region Z as a part of the humidifying rotor 352. The air heated by the heater 360 passes through a heating region Y as another part of the humidifying rotor 352 and flows toward the air supply and exhaust fan 354. During the air-exhausting operation, the air taken in from the indoor unit 312 and flowing through the air supply and exhaust duct 315 flows into the humidifying flow path 358b in the humidifying unit 350 and is discharged to outdoors through the air supply and exhaust port 351d.

### (7-5-5-2) Humidifying rotor

The humidifying rotor 352 has a substantially cylindrical outer shape, and has a moisture absorbing material 11a similar to a moisture absorbing material 352a according to the embodiment, as illustrated in FIG. 7. The humidifying rotor 352 having a substantially cylindrical shape is rotatably supported about an axis extending in an up-down direction, and is rotationally driven by a rotor driving motor. The humidifying rotor can adsorb moisture in the air in contact with the humidifying rotor 352, and can desorb the adsorbed moisture by being heated.

### (7-5-5-3) Adsorption fan 355

The adsorption fan 355 is rotationally driven by an adsorption fan motor, and generates an air flow passing through the adsorption region X that does not face the heater 360 in the humidifying rotor 352. Specifically, the adsorption fan 355 generates an air flow sucked from the first moisture absorption intake port 351b and the second moisture absorption intake port 351c, flowing through the moisture absorption flow path 358a, and exhausted to outdoors from the moisture absorption blow-out port 351a.

### (7-5-5-4) Heater

The heater 360 is located above a part of the humidifying rotor 352 located in the humidifying flow path 358b, and is disposed to face an upper surface of the humidifying rotor 352. The heater 360 heats air sent to the humidifying rotor 352 to desorb moisture from the humidifying rotor 352. The air heated by the heater 360 is sent to heat the humidifying rotor 352.

The heater 360 includes a plurality of electric heating wires as heating elements. The air passing through the heater 360 is heated by the electric heating wire.

The heater 360 has a function similar to the heater 12 according to the embodiment.

### (7-5-5-5) Air supply and exhaust fan

The air supply and exhaust fan 354 is disposed next to the humidifying rotor 352, and is used by being switched between a state of generating a flow of air taken in from outdoors and sent to the indoor unit 312 and a state of generating a flow of air taken in from the indoor space into the indoor unit 312 and sent to outdoors by switching of the flow path by the flow path switching device 353. The air supply and exhaust fan 354 can be configured by, for example, a centrifugal fan such as a turbo fan.

When the air taken in from outdoors is sent to the indoor unit 312, the air supply and exhaust fan 354 causes the outdoor air to flow into the humidifying flow path 358b from the air supply and exhaust port 351d and pass through the humidifying rotor 352, and then generates an air flow flowing to the indoor unit 312 through the flow path switching device 353 and the air supply and exhaust duct 315 as indicated by an arrow A1. When indoor air is exhausted from the indoor unit 312 to outdoors, the air supply and exhaust fan 354 generates an air flow flowing from the indoor unit 312 to the air supply and exhaust duct 315 and from the air supply and exhaust port 351d to outdoors through the humidifying flow path 358b as indicated by an arrow A2.

The air supply and exhaust fan 354 has a function similar to the second fan 14 according to the embodiment.

### (7-5-5-6) Flow path switching device

The flow path switching device 353 is disposed between the air supply and exhaust fan 354 and the air supply and exhaust duct 315. The flow path switching device 353 can switch a connection state of the air supply and exhaust fan 354 and the air supply and exhaust duct 315 between a supply state in which the humidifying flow path 358b and the air supply and exhaust duct 315 are connected and a supply stop state in which the humidifying flow path 358b and the air supply and exhaust duct 315 are disconnected. The flow path switching device 353 can also switch the direction of the air flow passing through the air supply and exhaust duct 315 in the supply state.

In the supply state, an air flow from the humidifying flow path 358b to the air supply and exhaust duct 315 or an air flow from the air supply and exhaust duct 315 to the humidifying flow path 358b is allowed. Therefore, in the supply state, it is possible to switch between a state in which the air flowing through the humidifying flow path 358b and blown out from the air supply and exhaust fan 354 flows in A1 direction in the air supply and exhaust duct 315 and a state in which the air passing through the air supply and exhaust duct 315 from the indoor unit 312 in A2 direction and sucked into the air supply and exhaust fan 354 is sent to the humidifying flow path 358b. It is possible to perform the air-supplying operation of taking the outdoor air into the indoor space by flowing the air in A1 direction in a state where the rotational drive of the humidifying rotor 352 is stopped and the heater 360 is stopped. It is also possible to perform the air-exhausting operation of exhausting the indoor air to outdoors by flowing the air in A2 direction in a state where the rotational drive of the humidifying rotor 352 is stopped and the heater 360 is stopped.

In the supply stop state, the air flow from the humidifying flow path 358b to the air supply and exhaust duct 315 or the air flow from the air supply and exhaust duct 315 to the humidifying flow path 358b is blocked. Therefore, in the supply stop state, the outdoor air is not supplied into the indoor unit 312 or the air in the indoor unit 312 is not discharged to outdoors.

### (7-5-6) Airflow during humidifying operation

During the humidifying operation, in the humidifying unit 350, the adsorption fan 355 is driven to cause the air to flow in the direction of arrow A11-12 through the moisture absorption flow path 358a, and the air supply and exhaust fan 354 is driven to cause the air to flow in the direction of arrow A21-23 through the humidifying flow path 358b. During the humidifying operation, the humidifying rotor 352 rotates in the direction of arrow R. Specifically, in the humidifying rotor 352, by rotating in the direction of arrow R, a portion located in the adsorption region X moves to the heating region Y, a portion located in the heating region Y moves to the cooling region Z, and a portion located in the cooling region Z moves to the adsorption region X again, and this movement is repeated.

The air taken in from the first moisture absorption intake port 351b and the second moisture absorption intake port 351c and flowing in the direction of arrow A11 passes through the adsorption region X of the humidifying rotor 352 from below to above, and then flows toward near above the bell mouth 357. The moisture included in the air taken in from the first moisture absorption intake port 351b and the second moisture absorption intake port 351c as described above is adsorbed by the humidifying rotor 352 when passing through the adsorption region X of the humidifying rotor 352.

The air that has passed through the bell mouth 357 downward from near above the bell mouth 357 enters the adsorption fan 355, is blown out from the adsorption fan 355 to flow in the direction of arrow A12, and is exhausted to outdoors from the moisture absorption blow-out port 351a.

The air taken in from the air supply and exhaust port 351d and flowing in the direction of arrow A21 passes through the cooling region Z of the humidifying rotor 352 from below to above and is directed to the heater 360. In the cooling region Z of the humidifying rotor 352, the humidifying rotor 352 is cooled by being supplied with outdoor air. Apart of the moisture included in the air passing through the cooling region Z of the humidifying rotor 352 can be adsorbed in the cooling region Z.

The air heated by the heater 360 passes through the heating region Y of the humidifying rotor 352 from above to below as air flowing in the direction of arrow A22-23, and is directed to the flow path switching device 353. When passing through the heating region Y of the humidifying rotor 352, the air heated by the heater 360 desorbs moisture adsorbed by the humidifying rotor 352 to become humidified air. Then, the humidified air that has reached the flow path switching device 353 is returned to the flow path switching device 353 through the air supply and exhaust fan 354, and is sent to the indoor unit 312 through the air supply and exhaust duct 315. The indoor space is thus humidified.

### (7-5-7) Cooling operation, dehumidifying operation, and heating operation

In the air conditioner 300 according to the present embodiment, the compressor 321 is driven in a state in which the four-way switching valve 322 is switched so that the indoor heat exchanger 313 functions as an evaporator of the refrigerant in the refrigerant circuit 310 and the outdoor heat exchanger 324 functions as a condenser of the refrigerant. Thus, the cooling operation of cooling the indoor air can be performed. During the cooling operation, the indoor fan 314 and the outdoor fan 329 are driven and controlled.

In addition, by weakening or stopping the driving of the indoor fan 314 in the same refrigerant flow as in the cooling operation to generate condensed water on a surface of the indoor heat exchanger 313, the dehumidifying operation of lowering an indoor humidity can be performed. As a result, in the air conditioner 300 according to the present embodiment, the humidifying operation and the dehumidifying operation can be performed, and the indoor humidity can be adjusted.

In addition, the compressor 321 is driven in a state in which the four-way switching valve 322 is switched so that the indoor heat exchanger 313 functions as a condenser of the refrigerant in the refrigerant circuit 310 and the outdoor heat exchanger 324 functions as an evaporator of the refrigerant. Thus, the heating operation of heating the indoor air can be performed. During the heating operation, the indoor fan 314 and the outdoor fan 329 are driven and controlled.

The cooling operation and the heating operation can be performed simultaneously with each of the humidifying operation, the air-supplying operation, and the air-exhausting operation described above. The dehumidifying operation can be performed simultaneously with each of the air-supplying operation and the air-exhausting operation described above.

### (7-5-8) Control of humidifying unit

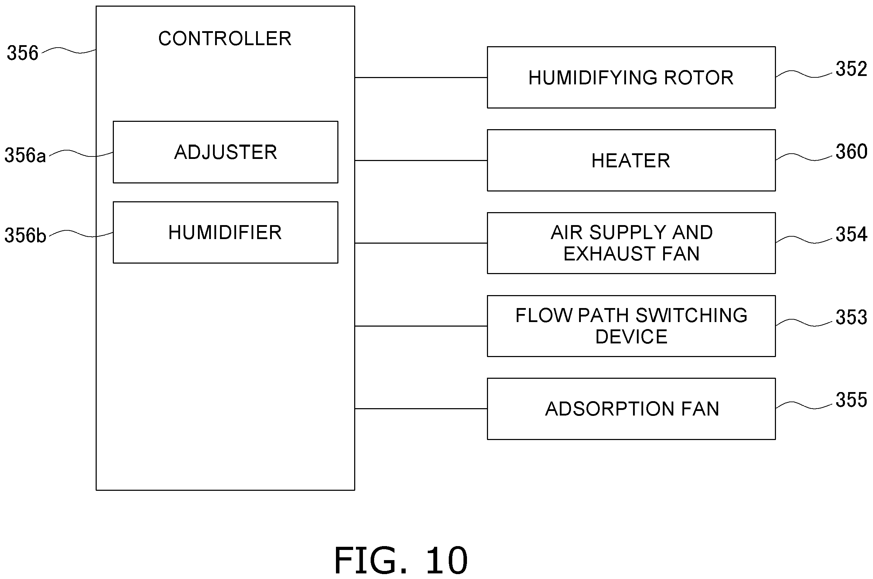

As illustrated in FIG. 7, the humidifying unit 350 further includes a controller 356 similar to the controller 16 according to the embodiment. As illustrated in FIG. 10, the controller 356 controls the humidifying rotor 352, the heater 360, the air supply and exhaust fan 354, the flow path switching device 353, and the adsorption fan 355.

Similarly to the controller 16 according to the embodiment, the controller 356 includes an adjuster 356a and a humidifier 356b.

The adjuster 356a adjusts the temperature of the moisture absorbing material 352a by controlling output of the heater 360. When the temperature of the moisture absorbing material 352a is raised, an amount of moisture desorbed from the moisture absorbing material 352a increases. When the temperature of the moisture absorbing material 352a is lowered, an amount of moisture desorbed from the moisture absorbing material 352a decreases. As a result, the adjuster 356a adjusts the amount of moisture to be desorbed from the moisture absorbing material 352a.

The humidifier 356b humidifies the indoor space by using the moisture desorbed from the moisture absorbing material 352a such that the humidity of the indoor space becomes a predetermined value. For example, the humidifier 356b controls output of the air supply and exhaust fan 354 to adjust a supply amount of the air humidified by passing through the humidifying rotor 352 to the indoor space. Thus, the humidifier 356b adjusts the humidity of the indoor space.

Instead of the humidifying unit 350, the outdoor air conditioning unit 320 may include a member corresponding to the controller 356.

### (7-5-9) Characteristics of air conditioner

The air conditioner 300 can increase the humidity in the indoor space and reduce the humidity in the indoor space. Accordingly, the humidity in the indoor space can be adjusted. In particular, a degree of humidification can be adjusted by adjusting a heating degree of the heater 360 and an air blowing amount of the air supply and exhaust fan 354. Here, even when the heating degree of the heater 360 is increased, since the heat-resistant temperature of the substrate of the moisture absorbing material 352a of the humidifying rotor 352 is high, and the heat resistance of the metal-organic framework carried by the substrate of the moisture absorbing material 352a is high, deterioration of the rotor and deterioration of the moisture absorption and desorption performance are suppressed.

The air conditioner 300 can adjust not only the indoor humidity but also an indoor temperature.

### -Conclusion-

The embodiment of the present disclosure has been described above. Various modifications to modes and details should be available without departing from the object and the scope of the present disclosure recited in the claims.

### REFERENCE SIGNS LIST

11a: Moisture absorbing material (adsorbing unit)
12: Heater (heating unit)
14: Second fan (supply unit)
16a: Adjuster
16b: Humidifier
31a: Moisture absorbing material (adsorbing unit)
32: Heater (heating unit)
34: Second fan (supply unit)
35: Condenser (condensing unit)
100: Humidity control apparatus
200: Atmospheric water generator
350: Humidifying unit (humidity control apparatus)
352a: Moisture absorbing material (adsorbing unit)
354: Air supply and exhaust fan (supply unit)
356a: Adjuster
356b: Humidifier
360: Heater (heating unit)
S1: Target space

### CITATION LIST

### PATENT LITERATURE

Patent Literature 1: WO 2018/118377 A

## Claims

1. A humidity control apparatus (100, 350) or an atmospheric water generator (200) comprising:
an adsorbing unit (11a, 31a, 352a) that adsorbs moisture; and
a heating unit (12, 32, 360) that heats the adsorbing unit and desorbs the moisture adsorbed by the adsorbing unit from the adsorbing unit, wherein
the adsorbing unit includes
a substrate, and
a metal-organic framework including a metal ion and an organic ligand, and the substrate has a heat-resistant temperature of 150°C or higher.

2. The humidity control apparatus or the atmospheric water generator according to claim 1, wherein the adsorbing unit includes
the metal-organic framework including a zirconium ion as the metal ion and fumaric acid as the organic ligand, or
the metal-organic framework including an aluminum ion as the metal ion and 3,5-pyrazole-dicarboxylic acid as the organic ligand.

3. The humidity control apparatus or the atmospheric water generator according to claim 1 or 2, wherein a value obtained by multiplying a density of the metal-organic framework by 90% RH water content of the metal-organic framework is 430 L/m³ or more.

4. The humidity control apparatus or the atmospheric water generator according to any one of claims 1 to 3, wherein the substrate includes a heat-resistant fiber.

5. The humidity control apparatus or the atmospheric water generator according to claim 4, wherein the heat-resistant fiber includes an aramid fiber.

6. The humidity control apparatus or the atmospheric water generator according to claim 4, wherein the heat-resistant fiber includes a PBO fiber.

7. The humidity control apparatus or the atmospheric water generator according to claim 4, wherein the heat-resistant fiber includes a glass fiber.

8. The humidity control apparatus or the atmospheric water generator according to claim 4, wherein the heat-resistant fiber includes a carbon fiber.

9. The humidity control apparatus or the atmospheric water generator according to any one of claims 1 to 8, further comprising a supply unit (14, 34,354) that supplies a gas heated by passing through the heating unit to the adsorbing unit.

10. The humidity control apparatus or the atmospheric water generator according to any one of claims 1 to 9, wherein a content of the metal-organic framework per unit area of the adsorbing unit is 70 wt% or more.

11. The humidity control apparatus or the atmospheric water generator according to any one of claims 1 to 10, further comprising an adjuster (16a, 356a) that adjusts an amount of the moisture to be desorbed from the adsorbing unit.

12. The humidity control apparatus according to any one of claims 1 to 11, further comprising a humidifier (16b, 356b) that humidifies a target space (S1) by using the moisture desorbed from the adsorbing unit.

13. The atmospheric water generator according to any one of claims 1 to 11, further comprising a condensing unit (35) that condenses the moisture desorbed from the adsorbing unit to obtain condensed water.
